# EUROPEAN PATENT APPLICATION

(11) **EP 4 442 654 A1**
(43) Date of publication of application: **09.10.2024**
(21) Application number: 23167078.7
(22) Date of filing: 06.04.2023
(51) Int. Cl.: C03B 5/235, C03B 5/00, C03C 1/00, C03C 3/087

(54) **METHODS OF RECYCLING CULLET AND FIBREGLASS**

(71) Applicant: ANKERPOORT N.V., 6223 EP Maastricht (NL)
(72) Inventor: BEYERS, Lesley, NL-6223 EP Maastricht (NL); VAN LIMPT, Johannes, NL-6223 EP Maastricht (NL)
(74) Representative: Forresters IP LLP

(57) **Abstract**

The present invention relates to methods of recycling cullet. The present invention also relates to methods of recycling fibreglass. In particular, the present invention utilises submerged combustion melting to recycle cullet and/or fibreglass.

## Description

### FIELD OF THE INVENTION

The present invention relates to methods of recycling cullet. The present invention also relates to methods of recycling fibreglass. In particular, the present invention utilises submerged combustion melting to recycle cullet and/or fibreglass.

### BACKGROUND OF THE INVENTION

The recycling of post-consumer waste glass produces cullet that can be colour-sorted, has organic materials (e.g. sugar, glue, paper and fats) removed and has non-glass materials removed (e.g. CSPs: ceramic, stone, porcelain). At least one product of this recovery method is a cullet waste stream that consists of fine (maximum dimension 5 mm or less) particles of glass with elevated concentrations of the organic materials and CSPs. At small particle sizes, optical sorters cannot distinguish glass from the CSPs. This waste stream is typically sent to landfill.

The production of fibreglass leads to various waste streams. Fibreglass waste generated before the application of a sizing (coating) can be ground to a powder and reintroduced into the melting furnace. For fibreglass waste generated after a sizing (coating) has been applied onto the surface of the glass fibres there is no economical outlet, nor can it be landfilled. Fibreglass waste (with sizing) is a material stream in search of a solution; the waste material is a mixture of fibres, lumps of fibres and fine particles. The presence of an (organic) coating and some minor contamination with platinum metal particles from the bushings of the spinning method make the material unsuitable to be re-introduced into a conventional fibreglass melting furnace.

Cullet waste and fibreglass waste are materials with limited options for reuse. Placing cullet waste and/or fibreglass waste in landfill is an environmental burden and leads to waste materials which have potential for beneficial use. The present inventors sought to find useful method steps for the treatment of waste cullet and waste fibreglass.

### SUMMARY OF THE INVENTION

The present invention relates to methods of recycling cullet and/or fibreglass.

The present inventors discovered that the processing of cullet and/or fibreglass in a submerged combustion melter leads to a clean and useful glass product, which improves the sustainability of the primary glass(fibre) manufacturing method and the circularity of the whole glass value chain.

The present invention is as set out in the following clauses:
1. A method of forming glass, the method comprising:
introducing cullet, or fibreglass, or cullet and fibreglass, into a glass melt contained within a submerged combustion melter, the submerged combustion melter comprising one or more submerged burners,
discharging combustion products from the one or more submerged burners directly into the glass melt, the one or more submerged burners combusting a combustible gas mixture that comprises fuel and oxygen,
maintaining a temperature of the glass melt from 1200°C to 1600°C,
maintaining a residence time of the glass melt from 1 hour to 10 hours, and,
discharging glass from the submerged combustion melter at a throughput rate that ranges from 2 tons per day per meter squared of cross-sectional area of the submerged combustion melter [tons/day/m²] to 25 tons/day/m²,
wherein the cullet, or fiberglass, or cullet and fibreglass, is introduced into the glass melt below the top level of the glass melt by submerged feeding.
2. The method of clause 1, wherein the temperature of the glass melt is maintained from 1300°C to 1500°C.
3. The method of clause 1 or clause 2, wherein the residence time of the glass melt is from 2 hours to 4 hours.
4. The method of any one of clauses 1 to 3, wherein glass is discharged from the submerged combustion melter at a throughput rate that ranges from 6 tons/day/m² to 12 tons/day/m².
5. The method of any one of clauses 1 to 4, wherein the cullet has the following chemical composition:

| **Component** | **From/weight %** | **To/weight %** |
|---|---|---|
| Fe₂O₃ | 0.2 | 0.8 |
| Al₂O₃ | 0.5 | 3.0 |
| TiO₂ | 0 | 0.2 |
| K₂O | 0.2 | 1.0 |
| CaO | 10.0 | 15.0 |
| MgO | 1.0 | 4.0 |
| Na₂O | 10.0 | 15.0 |
| SiO₂ | 70.0 | 75.0 |
| S | 0 | 0.3 |
| Impurities | Balance | Balance |

and, optionally, organic contamination from 1.5 to 10 weight % (or from 5 to 6 weight %).
6. The method of clause 5, wherein the cullet comprises from 200 ppm to 500 ppm PbO and the method reduces the level of PbO in the discharged glass to 150ppm or less.
7. The method of clause 5 or clause 6, wherein the method reduces the level of S in the discharged glass to nil or less than 0.05 weight %.
8. The method of any one of clauses 5 to 7, wherein the cullet is in particulate form, the particles of cullet having a maximum dimension of from 0.1 mm to 2 mm, or from 0.1 mm to 0.5 mm.
9. The method of any one of clauses 5 to 8, wherein the cullet does not contain B (Boron).
10. The method of any one of clauses 5 to 9, wherein the discharged glass has the following chemical composition:

| **Component** | **From/weight %** | **To/weight %** |
|---|---|---|
| Fe₂O₃ | 0.2 | 0.8 |
| Al₂O₃ | 0.5 | 3.0 |
| TiO₂ | 0 | 0.2 |
| K₂O | 0.2 | 1.0 |
| CaO | 10.0 | 15.0 |
| MgO | 1.0 | 4.0 |
| Na₂O | 10.0 | 15.0 |
| SiO₂ | 70.0 | 75.0 |
| S | 0 | 1 |
| Impurities | Balance | Balance |

11. The method of any one of clauses 1 to 10, wherein the fibreglass has the following chemical composition:

| **Component** | **From/weight %** | **To/weight %** |
|---|---|---|
| Fe₂O₃ | 0.2 | 1.5 |
| Al₂O₃ | 10.0 | 17.0 |
| TiO₂ | 0 | 0.5 |
| K₂O | 0.2 | 1.0 |
| CaO | 14.0 | 25.0 |
| MgO | 1.0 | 8.0 |
| Na₂O | 0 | 3 |
| SiO₂ | 55.0 | 65.0 |
| S | 0 | 0.1 |
| Impurities | Balance | Balance |

and, optionally, organic sizing (coating) from 0.1 to 3 weight %.
12. The method of clause 11, wherein the discharged glass has the following chemical composition:

| **Component** | **From/weight %** | **To/weight %** |
|---|---|---|
| Fe₂O₃ | 0.2 | 1.5 |
| Al₂O₃ | 10.0 | 17.0 |
| TiO₂ | 0 | 0.5 |
| K₂O | 0.2 | 1.0 |
| CaO | 14.0 | 25.0 |
| MgO | 1.0 | 8.0 |
| Na₂O | 0 | 3.0 |
| SiO₂ | 55.0 | 65.0 |
| S | 0 | 0.1 |
| Impurities | Balance | Balance |

13. The method of any one of clauses 1 to 12, wherein the discharged glass is glass frit, container glass, float glass, borosilicate glass, glass fiber, fibreglass or glass wool.
14. Use of a submerged combustion melter to partially or fully remove S, or PbO, or S and PbO, from cullet, or fibreglass, or cullet and fibreglass, and form discharged glass.
15. The use of clause 14 comprising:
introducing cullet, or fibreglass, or cullet and fibreglass, into a glass melt contained within a submerged combustion melter, the submerged combustion melter comprising one or more submerged burners.
16. The use of clause 14 or clause 15, wherein the use further comprises:
discharging combustion products from the one or more submerged burners directly into the glass melt, the one or more submerged burners combusting a combustible gas mixture that comprises fuel and oxygen,
maintaining a temperature of the glass melt from 1200°C to 1600°C,
maintaining a residence time of the glass melt from 1 hour to 10 hours, and,
discharging glass from the submerged combustion melter at a throughput rate that ranges from 2 tons per day per meter squared of cross-sectional area of the submerged combustion melter [tons/day/m²] to 25 tons/day/m²,
wherein the cullet, or fiberglass, or cullet and fibreglass, is introduced into the glass melt below the top level of the glass melt by submerged feeding.
17. The use of any one of clauses 14 to 16, wherein the cullet and/or the fibreglass comprises from 200 ppm to 500 ppm PbO and the use reduces the level of PbO in the discharged glass to 150 ppm or less.
18. The use of any one of clauses 14 to 17, wherein the cullet and/or the fibreglass comprises S and the use reduces the level of S in the discharged glass to nil or less than 0.05 weight %.

Alternatively, in clause 1 and all clauses dependent on clause 1, the cullet, or fiberglass, or cullet and fibreglass, is introduced into the glass melt above the top level of the glass melt.

Further alternatively, in clause 1 and all clauses dependent on clause 1, some of the cullet, or fiberglass, or cullet and fibreglass, is introduced into the glass melt below the top level of the glass melt by submerged feeding, whilst some of the cullet, or fiberglass, or cullet and fibreglass, is introduced into the glass melt above the top level of the glass melt.

### BRIEF DESCRIPTION OF THE FIGURES

Embodiments of the invention are described below with reference to the accompanying drawings. The accompanying drawings illustrate various embodiments of systems, methods, and embodiments of various other aspects of the disclosure. Any person with ordinary skills in the art will appreciate that the illustrated element boundaries (e.g., boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another and vice versa. Furthermore, elements may not be drawn to scale. Non-limiting and non-exhaustive descriptions are described with reference to the following drawings. The components in the figures are not necessarily to scale, emphasis instead being placed upon illustrating principles.
Figure 1A shows images of shredded fibreglass waste A; Figure 1B shows images of shredded fibreglass waste B.
Figure 2A shows images of cullet waste C; Figure 2B shows images of cullet waste D.
Figure 3A shows images of glass frit obtained from shredded fibreglass waste A;
Figure 3B shows images of glass frit obtained from shredded fibreglass waste B.
Figure 4A shows images of glass frit obtained from cullet waste C; Figure 4B shows images of glass frit obtained from cullet waste D.

### DETAILED DESCRIPTION OF THE INVENTION

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred systems and methods are now described.

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

Some of the terms used to describe the present invention are set out below:
"Carbon content " refers to the total amount of carbon present in a sample. Carbon content can be measured by combustion analysis. In some examples, the carbon content can be measured by combustion analysis with a LECO^{™} CS230.
"Cullet" refers to broken and/or ground waste glass. Cullet can be separated into different waste streams, depending on particle size and/or contamination. Cullet can be contaminated with organic material, metals and/or ceramic pieces. Some examples of cullet fall within the following chemical composition:

| **Component** | **From/weight %** | **To/weight %** |
|---|---|---|
| Fe₂O₃ | 0.2 | 0.8 |
| Al₂O₃ | 0.5 | 3.0 |
| TiO₂ | 0 | 0.2 |
| K₂O | 0.2 | 1.0 |
| CaO | 10.0 | 15.0 |
| MgO | 1.0 | 4.0 |
| Na₂O | 10.0 | 15.0 |
| SiO₂ | 70.0 | 75.0 |
| S | 0 | 0.3 |
| Unavoidable Impurities | Balance | Balance |

and, optionally, organic contamination from 1.5 to 10 weight % (or from 5 to 6 weight %).
"Fibreglass" refers to glass fibres that are used in the manufacture of a fibre-reinforced plastic. The glass fibres may be randomly arranged, flattened into a sheet or woven into glass cloth. The plastic matrix may be a thermoset polymer matrix (e.g. epoxy, polyester resin or vinyl ester resin) or a thermoplastic. Some examples of fibreglass fall within the following chemical composition:

| **Component** | **From/weight %** | **To/weight %** |
|---|---|---|
| Fe₂O₃ | 0.2 | 1.5 |
| Al₂O₃ | 10.0 | 17.0 |
| TiO₂ | 0 | 0.5 |
| K₂O | 0.2 | 1.0 |
| CaO | 14.0 | 25.0 |
| MgO | 1.0 | 8.0 |
| Na₂O | 0 | 3 |
| SiO₂ | 55.0 | 65.0 |
| S | 0 | 0.1 |
| Unavoidable Impurities | Balance | Balance |

and, optionally, organic sizing (coating) from 0.1 to 3 weight % (that facilitates bonding with the plastic matrix).
"Glass" is an amorphous, non-crystalline, solid material. Glasses are typically brittle and often optically transparent. A glass is defined as an inorganic product of fusion which has been cooled through its glass transition to the solid state without crystallising. The main component of most glasses, in general use, is silica (SiO₂).

Common glass is generally produced in a two step method, and then shaped to make it suitable for a variety of applications. The first step is batch mixing. The mixture of ingredients to make up the glass (typically at least, silica, sodium carbonate, calcium carbonate and recycled glass (in the form of cullet), together with small quantities of various other trace ingredients) are mixed, to ensure an even mix of ingredients, and fed into the furnace. In the second step, the mixture is heated to around 1,500 °C, where the ingredients melt, various chemical reactions take place and CO₂ and SO₂ are evolved. These chemical reactions form molten glass (or, "glass solution") which can be moulded and cooled.

"LOI" refers to loss on ignition. This measurement is conducted by strongly heating a sample of the mineral at a specified temperature and allowing any volatile substances to escape. This will continue until the mass of the mineral stops changing. The value of LOI represents the mass of volatile material present in a sample, after an initial 1 hour drying step at 105 °C.

"Submerged Combustion Melting" refers to a method for forming and maintaining a glass melt by the application of combustion products from the one or more submerged burners directly into the glass melt, the one or more submerged burners combusting a combustible gas mixture that comprises fuel and oxygen. In the case of air or oxygen-enriched air, the combustion products would include nitrogen, in addition to fuel and oxygen. Submerged combustion melting is in contrast to "standard" melting where burners and/or heaters apply heat above the level of the glass melt and/or supply heat into the glass melt through submerged electrodes.

"Unavoidable impurities" refers to components present in a composition which do not affect the properties of the composition. Unavoidable impurities are present in a composition at: less than 5 weight %; or, less than 4 weight %; or, less than 3 weight %; or, less than 2 weight %; or, less than 1 weight %; or less than 0.5 weight %; or less than 0.1 weight %.

"Weight %" refers to the percentage weight in grams of a component of a composition in every 100 grams of a composition. For example, if a composition contains a component at 25 weight %, then there is 25 g of the component for every 100 g of the composition.

### Submerged Combustion Melting

### Cullet

Cullet waste is typically unsuitable to be reintroduced in conventional glass melting furnaces due to the small particle sizes and high levels of organic contamination, (an exception being described in EP4112573A1, the disclosure of which is incorporated by reference in its entirety).

According to the present invention, cullet waste is melted in a submerged combustion melter (SCM). An SCM is a highly efficient melter that is capable of quickly dissolving materials into the silica melt. Due to the high operating temperature and intensity of the method, any CSP particles will quickly dissolve into the silica melt. The high intensity contact between the combustion gases and the melt/materials makes it possible to combust any organic material that is fed into the furnace.

Submerged batch charging of the cullet waste makes it possible to feed this fine material into the furnace with limited risk of dust formation and carry-over. In conventional furnaces, the feed material (glass batch) is fed on top of the silicate melt and has a combustion space with flames overhead. The introduction of fine materials into a conventional furnace often leads to carry-over; the fine materials are entrapped into the off-gas and carried to the regenerators.

### Fibreglass

Fibreglass waste (consisting of fibres, lumps and powder) with sizing (coating) is a waste material without an outlet and cannot be reintroduced into a fibreglass production furnace. According to the present invention, fibreglass waste is remelted in an SCM to a glass frit with a composition close to the original fibreglass. All organic material of the sizing (coating) will be burned off in the combustion method and any platinum particles will dissolve into the glass melt as oxides and be present in trace quantities.

An additional benefit is that a SCM offers control over the conditions imposed on the silicate melt, through which the furnace can accommodate a wide range of materials and control the oxidation-affected properties of the glass product. Combustion gases can be created under non-stoichiometric conditions (as defined by the fuel and oxidants supplied through the burners). With the intensive contact between the combustion gases and the silicate melt, the conditions of the gas will directly interact with the raw materials and the melt. The oxidising/reducing conditions of the combustion flame will affect the iron redox state of the glass. Excess oxygen can effectively combust organic material that is contained within the feed material (and hence supplied to the furnace as a solid, not a gaseous fuel in the burners), and reducing conditions can improve the evaporation of volatile components (e.g. sulfur and lead).

The processing of cullet waste and/or fibreglass waste in an SCM leads to the production of a clean and homogeneous glassy material. The high operating temperatures in the furnace and the control over the oxidising power of the combustion gases make it possible to remove volatile components (like sulfur and lead) from the glass. A sulfur-lean (< detect limit) and lead-lean (<100ppm) glass frit is an economically attractive and environmental friendly alternative to the original cullet and/or fibreglass waste. The high-temperature, high-intensity melting also enable the fast and complete dissolution of contaminations with high melting temperatures (i.e. ceramic particles in the cullet waste and platinum metal particles in the fibreglass waste).

The combination of a SCM with submerged batch charging enables the processing of waste materials with different physical characteristics (coarse materials, fine powders, fibres and lumps of fibres).

### Examples

The following are non-limiting examples that discuss, with reference to tables and figures, the advantages of using submerged combustion melting to recycle cullet and/or fibreglass.

### Example 1: SCM applied to waste cullet and waste fibreglass

In this non-limiting example, trials were conducted at the facilities of Combustion Consulting Italy S.r.l. (CCI). Their installation was an SCM furnace (as described in WO2021/197750 A1, the disclosure of which is incorporated by reference in its entirety) equipped with linear submerged combustion burners (as described in CN114060800 A1, the disclosure of which is incorporated by reference in its entirety). The burners were run with an air-fuel mixture, with the possibility to enrich the air with oxygen. The furnace was built from water-cooled metal panels and this design leads to solidified silicate melt on the interior panels of the furnace.

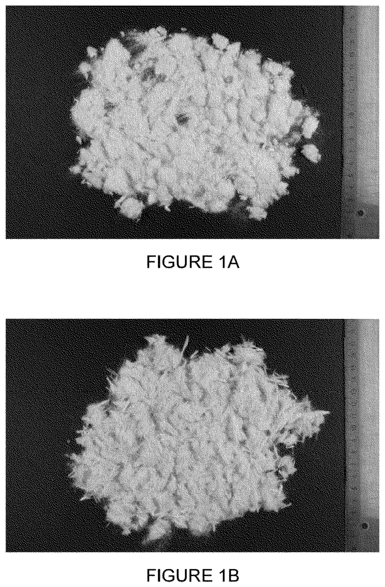

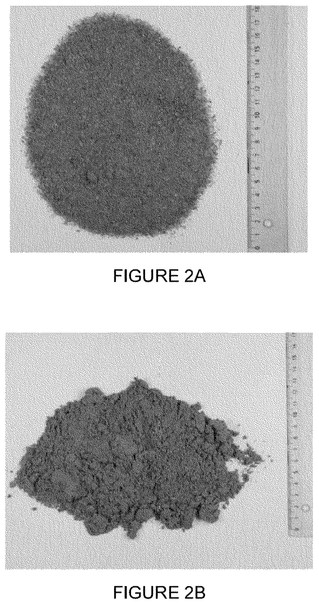

Processing of the waste materials (starting materials of the claimed methods) was undertaken in separate campaigns (1, 2, 3 and 4):
1. Shredded Fibreglass Waste A (Fig 1A).
2. Shredded Fibreglass Waste B (Fig 1B).
3. Cullet Waste C (Fig 2A).
4. Cullet Waste D (Fig 2B).

The SCM technology enables the processing of a wide variety of raw materials and waste materials. When combined with the submerged charging of the batch materials, the furnace can accommodate various physical forms of the materials, including: coarse particles, fine powders, glass fibres and/or lumps of fibres.

The materials selected for the campaigns listed above were chosen to validate the hypothesis that the SCM furnace can process waste materials in various forms and can produce a homogeneous glass from glass waste contaminated with organic materials and ceramic particles. The flexible control over the combustion method and the high intensity mixing between combustion gases and the glass melt make it possible for the SCM furnace to effectively dissolve ceramic particles and utilise the caloric heat provided by the organic contaminations. In addition, the submerged batch charging is an enabling technology to accommodate the wide physical variety in waste materials (coarse, fine, fibres, lumps), while reducing the risk of dust formation within the furnace and carry-over of fine particles of waste material into the off-gas system.

In contrast, the introduction of fine materials into a conventional furnace (where burners and/or heaters apply heat above the level of the glass melt and optionally supply heat into the glass melt through submerged electrodes) often leads to carry-over; the fine materials are entrapped into the off-gas and carried to the regenerators. Simply remelting the cullet (for example cullet waste) in a conventional furnace would result in char formation due to the absence of intense contact with oxygen. This leads to slower reaction kinetics and quality defects at arbitrary points later in the furnace.

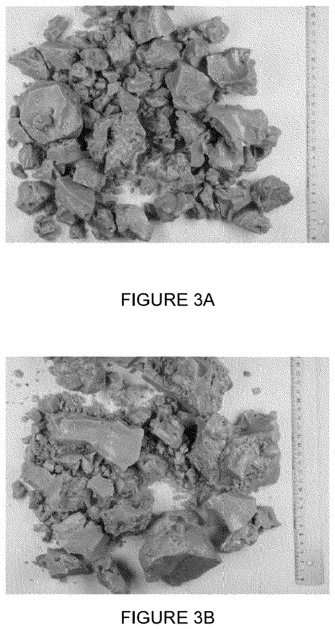

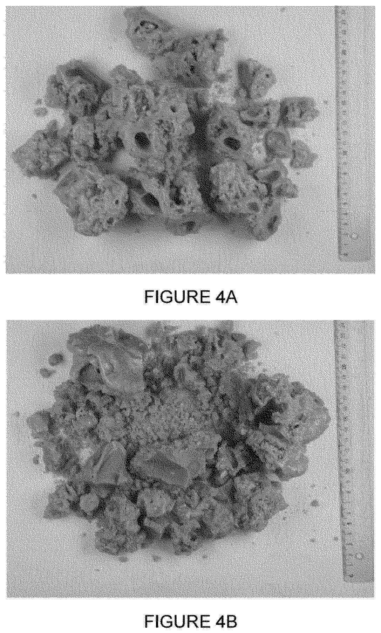

The production campaigns in the water-cooled SCM furnace with linear burners and a submerged batch charger produced the following products:
1. Shredded Fibreglass Waste A was converted from a fibrous material (Fig 1A) with an organic sizing (LOI = 0.25%) to a homogeneous glass frit with fibreglass chemical composition (Fig 3A).
2. Shredded Fibreglass Waste B was converted from a fibrous material (Fig 1B) with an organic sizing (LOI = 0.10%) to a homogeneous glass frit with fibreglass chemical composition (Fig 3B).
3. Cullet Waste C was converted from fine glass particles (0-1.6 mm; Fig 2A) contaminated with organic material (LOI = 2%) to a homogeneous glass frit with container glass composition (Fig 4A).
4. Cullet Waste D was converted from fine glass particles (0-1 mm; Fig 2B) contaminated with organic material (LOI = 6%) to a homogeneous glass frit with container glass composition (Fig 4B).

Cullet Waste C and D are consistent with the specification of EP4112573A1 (the disclosure of which is incorporated by reference). The increased concentration of notably aluminium oxide is indicative of the presence of fine ceramic particles (CSPs) in the cullet waste.

Exemplary compositions for the starting materials (e.g. A SM) and the resulting glass frit (e.g. A F) can be found in the table. The minor shifts in composition (notably iron, aluminium, and calcium) is due to a prior campaign with basalt. Basalt was still a primary component of the protective silicate layer on the inner walls of the water-cooled panels.

**Table 1: Chemical composition of starting materials (SM) and product glass frits (F), after submerged combustion melting.**

| **Component/ weight %** | **A SM** | **A F** | **B SM** | **B F** | **C SM** | **C F** | **D SM** | **D F** | **Basalt** |
|---|---|---|---|---|---|---|---|---|---|
| Fe₂O₃ | 0.3 | 1 | 0.3 | 0.8 | 0.3 | 0.4 | 0.5 | 0.4 | 8.3 |
| Al₂O₃ | 12.5 | 14.3 | 12.5 | 14.2 | 1.6 | 2.6 | 2 | 2.6 | 17.4 |
| TiO₂ | 0.4 | 0.3 | 0.4 | 0.3 | nil | nil | 0.1 | 0.1 | 0.9 |
| K₂O | 0.6 | 0.9 | 0.5 | 0.7 | 0.6 | 0.7 | 0.7 | 0.7 | 8 |
| CaO | 23.3 | 19.8 | 23 | 21.6 | 11.2 | 11.2 | 11.4 | 11 | 9.8 |
| MgO | 3.1 | 3.3 | 3 | 3.1 | 1.3 | 1.6 | 1.4 | 1.8 | 3.8 |
| Na₂O | 0.05 | 2.6 | 0.05 | 0.9 | 12.7 | 12.2 | 12.5 | 12.3 | 2.4 |
| SiO₂ | 59.5 | 57.7 | 60.2 | 58.3 | 71.9 | 71.1 | 71.2 | 70.9 | 48.4 |
| S | 0.025 | nil | 0.01 | nil | 0.11 | nil | 0.2 | nil | 0 |
| | | | | | | | | | |
| Pb/ppm | | | | | 350 | 0 | 370 | 0 | |
| SO₃/ppm | | | | | 1100 | 70 | 2000 | 300 | |

When the total weight % of the combined components does not add up to 100%, the remainder is unavoidable impurities.

All materials after processing with the SCM were homogenous frits with a reduced density due to the high volume of bubbles. The LOI of all samples became negligible (< 0.01%) and had a 90% reduction in carbon content. All glass frits were notably absent of sulfur and lead (if present in the original). The material was quenched with water and collected in bulk in containers.

Products consisting of smaller silicate particles (down to microns) were created by crushing and grinding the material. Alternatively, standard frit production equipment (from a glass melt) could be implemented at the SCM as a post-processing step, directly leading to millimetre-size glass particles and only requiring further grinding in the case of sub-millimetre glass particles.

Whilst the examples led to the production of glass frits, it is possible to use known glass production equipment to form glass in any desired form, including but not limited to glass frit, container glass, float glass, borosilicate glass, glass fiber, fibreglass or glass wool.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of forming glass, the method comprising:
introducing cullet, or fibreglass, or cullet and fibreglass, into a glass melt contained within a submerged combustion melter, the submerged combustion melter comprising one or more submerged burners,
discharging combustion products from the one or more submerged burners directly into the glass melt, the one or more submerged burners combusting a combustible gas mixture that comprises fuel and oxygen,
maintaining a temperature of the glass melt from 1200°C to 1600°C,
maintaining a residence time of the glass melt from 1 hour to 10 hours, and,
discharging glass from the submerged combustion melter at a throughput rate that ranges from 2 tons per day per meter squared of cross-sectional area of the submerged combustion melter [tons/day/m²] to 25 tons/day/m²,
wherein the cullet, or fiberglass, or cullet and fibreglass, is introduced into the glass melt below the top level of the glass melt by submerged feeding.

2. The method of claim 1, wherein the temperature of the glass melt is maintained from 1300°C to 1500°C.

3. The method of claim 1 or claim 2, wherein the residence time of the glass melt is from 2 hours to 4 hours.

4. The method of any one of claims 1 to 3, wherein glass is discharged from the submerged combustion melter at a throughput rate that ranges from 6 tons/day/m² to 12 tons/day/m².

5. The method of any one of claims 1 to 4, wherein the cullet has the following chemical composition:
| **Component** | **From/weight %** | **To/weight %** |
|---|---|---|
| Fe₂O₃ | 0.2 | 0.8 |
| Al₂O₃ | 0.5 | 3.0 |
| TiO₂ | 0 | 0.2 |
| K₂O | 0.2 | 1.0 |
| CaO | 10.0 | 15.0 |
| MgO | 1.0 | 4.0 |
| Na₂O | 10.0 | 15.0 |
| SiO₂ | 70.0 | 75.0 |
| S | 0 | 0.3 |
| Impurities | Balance | Balance |
and, optionally, organic contamination from 1.5 to 10 weight % (or from 5 to 6 weight %); optionally,
wherein the cullet comprises from 200 ppm to 500 ppm PbO and the method reduces the level of PbO in the discharged glass to 150ppm or less.

6. The method of claim 5, wherein the method reduces the level of S in the discharged glass to nil or less than 0.05 weight %.

7. The method of claim 5 or claim 6, wherein the cullet is in particulate form, the particles of cullet having a maximum dimension of from 0.1 mm to 2 mm, or from 0.1 mm to 0.5 mm.

8. The method of any one of claims 5 to 7, wherein the cullet does not contain B (Boron).

9. The method of any one of claims 5 to 8, wherein the discharged glass has the following chemical composition:
| **Component** | **From/weight %** | **To/weight %** |
|---|---|---|
| Fe₂O₃ | 0.2 | 0.8 |
| Al₂O₃ | 0.5 | 3.0 |
| TiO₂ | 0 | 0.2 |
| K₂O | 0.2 | 1.0 |
| CaO | 10.0 | 15.0 |
| MgO | 1.0 | 4.0 |
| Na₂O | 10.0 | 15.0 |
| SiO₂ | 70.0 | 75.0 |
| S | 0 | 1 |
| Impurities | Balance | Balance |

10. The method of any one of claims 1 to 9, wherein the fibreglass has the following chemical composition:
| **Component** | **From/weight %** | **To/weight %** |
|---|---|---|
| Fe₂O₃ | 0.2 | 1.5 |
| Al₂O₃ | 10.0 | 17.0 |
| TiO₂ | 0 | 0.5 |
| K₂O | 0.2 | 1.0 |
| CaO | 14.0 | 25.0 |
| MgO | 1.0 | 8.0 |
| Na₂O | 0 | 3 |
| SiO₂ | 55.0 | 65.0 |
| S | 0 | 0.1 |
| Impurities | Balance | Balance |
and, optionally, organic sizing (coating) from 0.1 to 3 weight %; optionally,
wherein the discharged glass has the following chemical composition:
| **Component** | **From/weight %** | **To/weight %** |
|---|---|---|
| Fe₂O₃ | 0.2 | 1.5 |
| Al₂O₃ | 10.0 | 17.0 |
| TiO₂ | 0 | 0.5 |
| K₂O | 0.2 | 1.0 |
| CaO | 14.0 | 25.0 |
| MgO | 1.0 | 8.0 |
| Na₂O | 0 | 3.0 |
| SiO₂ | 55.0 | 65.0 |
| S | 0 | 0.1 |
| Impurities | Balance | Balance |

11. The method of any one of claims 1 to 10, wherein the discharged glass is glass frit, container glass, float glass, borosilicate glass, glass fiber, fibreglass or glass wool.

12. Use of a submerged combustion melter to partially or fully remove S, or PbO, or S and PbO, from cullet, or fibreglass, or cullet and fibreglass, and form discharged glass.

13. The use of claim 12 comprising:
introducing cullet, or fibreglass, or cullet and fibreglass, into a glass melt contained within a submerged combustion melter, the submerged combustion melter comprising one or more submerged burners.

14. The use of claim 12 or claim 13, wherein the use further comprises:
discharging combustion products from the one or more submerged burners directly into the glass melt, the one or more submerged burners combusting a combustible gas mixture that comprises fuel and oxygen,
maintaining a temperature of the glass melt from 1200°C to 1600°C,
maintaining a residence time of the glass melt from 1 hour to 10 hours, and,
discharging glass from the submerged combustion melter at a throughput rate that ranges from 2 tons per day per meter squared of cross-sectional area of the submerged combustion melter [tons/day/m²] to 25 tons/day/m²,
wherein the cullet, or fiberglass, or cullet and fibreglass, is introduced into the glass melt below the top level of the glass melt by submerged feeding.

15. The use of any one of claims 12 to 14, wherein:
the cullet and/or the fibreglass comprises from 200 ppm to 500 ppm PbO and the use reduces the level of PbO in the discharged glass to 150 ppm or less; and/or,
wherein the cullet and/or the fibreglass comprises S and the use reduces the level of S in the discharged glass to nil or less than 0.05 weight %.
